(19) Europäisches Patentamt
European Patent Office
Office européen des brevets

(11) Numéro de publication: **0 002 973**
**B1**

(12) **FASCICULE DE BREVET EUROPEEN**

(45) Date de publication du fascicule de brevet: **25.11.81**

(51) Int. Cl.³: **C 07 F 3/10**

(21) Numéro de dépôt: **78400227.1**

(22) Date de dépôt: **12.12.78**

(54) **Procédé de préparation d'halogénomercurialdéhydes et cétones.**

(30) Priorité: **23.12.77 FR 7739004**

(43) Date de publication de la demande:
**11.07.79 Bulletin 79/14**

(45) Mention de la délivrance du brevet:
**25.11.81 Bulletin 81/47**

(84) Etats Contractants Désignés:
**BE CH DE GB LU NL SE**

(56) Documents cités:
**Chemical Abstracts, vol. 44, n° 16, 25 - 8 - 1950, column 7225c, Columbus, Ohio USA**
**A.N. NESMEYANOV et al. : "Preparation of monohalomercury ketones and aldehydes from enol acetates and their reactions"**

**Chemical Abstracts, vol. 50, n° 7, 10 - 4 - 1956, column 4773b, Columbus, Ohio USA**
**I.F. LUTSENKO et al. : "Reaction of mercury oxide with vinyl ethers"**

(73) Titulaire: **SOCIETE NATIONALE DES POUDRES ET EXPLOSIFS**
**12, quai Henri IV**
**F-75181 PARIS CEDEX 04 (FR)**

(72) Inventeur: **Lecolier, Serge**
**3, allée des Cartelines**
**F-91510 Janville sur Juine (FR)**
Inventeur: **Malfroot, Thierry**
**1bis, route de Tigery**
**F-91100 Saint Germain les Corbeil (FR)**
Inventeur: **Piteau, Marc**
**38, avenue de Ballancourt**
**F-91710 Itteville (FR)**
Inventeur: **Senet, Jean-Pierre**
**19, Chemin Latéral**
**Livry sur Seine F-77000 Melun (FR)**

**EP 0 002 973 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé de préparation d'halogénomercurialdéhydes et cétones

La présente invention a pour objet un procédé de préparation des halogénomercurialdéhydes et cétones.

NESMEYANOV et PEREVALOVA ont montré en 1954, dans le Bulletin de l'Académie des Sciences de 1'URSS, Division Sciences Chimiques, pages 873—877, l'intérêt des halogénomercuriacétaldéhydes, notamment du chloromercuriacétaldéhyde, dans la synthèse de nombreux esters vinyliques par action sur les chlorures d'acyle.

La demanderesse a également montré dans sa demande de brevet français 77.05641 qu'il est possible de fabriquer, dans d'excellentes conditions, du chloformiate de vinyle à partir de chloromercuriacétaldéhyde. Compte tenu du très grand intérêt présenté par le chloroformiate de vinyle et, dans une moindre mesure, par les esters vinyliques, il existe un gros besoin en chloromercuriacétaldéhyde.

NESMEYANOV et Coll. ont d'abord proposé, op. cit. 1947, pages 63—69 (Chemical Abstracts 42, 4149a), de procéder par action du butyl vinyl éther sur l'acétate mercurique en présence d'eau, puis addition de chlorure de potassium. LUTSENKO et Coll. ont ensuite préconisé dans le même ouvrage pages 173—177 (1956), (Chemical Abstracts 50, 13730 g), de se placer dans un milieu éther anhydre et d'hydrolyser le composé intermédiaire ainsi obtenu. Enfin, NESMEYANOV et Coll. ont utilisé les mêmes réactifs, plus l'oxyde mercurique, en milieu alcoolique pour parvenir également au chloromercurique avec un excellent rendement (Izvest. Akad. Nauk. SSSR Otdel. Khim. Nauk., pages 942 948, 1957), (Chemical Abstracts 52, 4476b).

Toutefois ces procédés ne sont pas satisfaisants en vue d'une production industrielle car ils font appel à des éthers vinyliques qui sont coûteux et, pour deux d'entre eux, àn des milieux réactionnels d'emploi relativement malcommode.

NESMEYANOV et Coll. ont certes également proposé, dans Izvest. Akad. Nauk. SSSR (1949), pages 601—606, (Chemical Abstracts 44, 7225c), de faire réagir sous agitation des acétates d'alkényle et de mercure dans l'eau, de filtrer le mélange obtenu et d'additionner au soluté du chlorure de potassium pour obtenir finalement le chloromercurialdéhyde ou la chloromercuricétone. Cependant, s'il présente une amélioration au niveau des coûts par rapport aux procédés évoqués précédemment, ce procédé n'est pas totalement satisfaisant car il procède par deux étapes et conduit à des produits de pureté moyenne qu'il est indispensable de recristalliser afin de pouvoir les stocker sans qu'ils subissent de dégradation.

Enfin, selon une autre voie, il est possible d'obtenir un halogénomercurialdéhyde par action d'un halogénure mercurique sur le mercuridiacétaldéhyde, comme l'ont montré LUTSENKO et KHOMUTOV dans Doklad. Akad. Nauk. SSSR *102*, 97—99, (1995), (Chemical Abstracts 50, 4773b).

Toutefois, encore une fois, ce procédé n'est pas très intéressant puisque, d'une part, le mercuridiacétaldéhyde est déjà directement utilisable pour synthétiser le chloroformiate de vinyle et, d'autre part, il nécessite lui-même pour sa synthèse les mêmes esters vinyliques coûteux évoqués précédemment.

Il a maintenant été découvert un procédé de fabrication des halogénomercurialdéhydes et cétones permettant de fabriquer ces composés en une seule étape et à partir de matières premières peu coûteuses.

Le procédé selon l'invention est caractérisé en ce qu'on fait réagir un ester alkinylique $\alpha$—$\beta$ insature d'acide carboxylique sur un halogénure mercurique, en présence d'eau, en présence d'un accepteur de l'acide halohydrique qui se forme.

Il a été en effet découvert que, d'une manière surprenante, les esters alkényliques $\alpha$—$\beta$ insaturés d'acides carboxyliques ont une réactivité suffisante vis à vis des halogénures mercuriques pour donner lieu à la réaction selon l'équation:

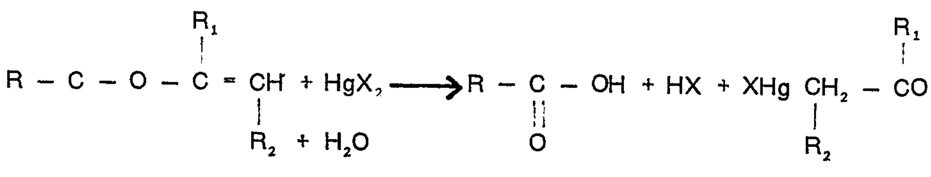

(I) (II)

Les halogénomercurialdéhydes et cétones concernés par le procédé selon la présente invention sont ceux de formule générale:

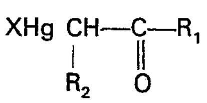 (II)

où X = Cl ou Br,

$R_1$ est un hydrogène ou groupe alkyle comprenant de 1 à 4 atomes de carbone,

$R_2$ est un hydrogène ou bien forme avec $R_1$ un groupe cycloalkyle comprenant de 5 à 7 atomes de carbone.

Les esters alkényliques $\alpha$—$\beta$ insaturés de

formule (I) notamment utilisables dans le cadre de la présente invention sont ceux dans lesquels $R_1$ et $R_2$ ont les significations précitées et où R est un groupe aliphatique comprenant de 1 à 12 atomes de carbone, éventuellement substitué par un ou plusieurs groupes alkényloxycarbonyle identiques ou bien R est un groupe aromatique. Autrement dit, les esters préférés sont les esters d'alkényle des monoacides et polyacides aliphatiques et des monoacides aromatiques.

D'une manière générale, dans le cadre de la présente invention, on utilise de préférence un ester tel que ceux d'alcanoïques légers qui sont peu coûteux comme les formiates ou les acétates.

Les halogénures mercuriques utilisés selon l'invention sont le chlorure et le bromure mercurique. La concentration en halogénure mercurique dans le milieu est telle qu'il est, soit totalement dissous dans le milieu réactionnel, soit, de préférence, en partie dissous et en partie en suspension dans ledit milieu.

Dans le dernier cas, au cours de la réaction, et au fur et à mesure de la formation de l'halogénomercurialdéhyde ou cétone, la proportion d'halogénure mercurique dans la suspension diminue de préférence jusqu'à s'annuler de manière à pouvoir récupérer facilement par filtration l'halogénomercurialdéhyde ou cétone uniquement, à l'état pur, à la fin de la réaction.

Le milieu réactionnel est formé soit uniquement d'eau, soit d'un mélange d'eau et d'un solvant organique miscible ou non miscible à l'eau. Il convient dans chaque cas d'utiliser au moins la quantité d'eau correspondant à la stoechiométrie de la réaction (I) mais il est préféré d'en employer un fort excès.

D'une manière générale le milieu réactionnel doit être capable de solubiliser, à la température de réaction, au moins partiellement l'halogénure mercurique, l'accepteur d'acide, et, dans une moindre mesure, l'ester d'alkényle.

Par ailleurs, on préfère particulièrement les milieux réactionnels dans lesquels l'halogénomercurialdéhyde ou cétone n'est, en outre, pas soluble. Ainsi, dans la version la plus simple, qui n'est pas la moins satisfaisante, on peut utiliser seulement de l'eau ou de l'eau mêlée avec une quantité faible à prépondérante d'un solvant organique, l'acétone, le méthanol, l'éthanol, le propanol, l'acétonitrile, le nitrobenzène et le toluène, miscible ou non à l'eau.

Les proportions relatives convenables des différents constituants sont en principe celles de la stoechiométrie mais, en pratique, il est très avantageux d'utiliser, d'une part, comme il a été dit, un fort excès d'eau par rapport aux deux autres réactifs, et, d'autre part, un excès molaire d'ester alkénylique $\alpha$—$\beta$ insaturé, de préférence de 0 à 30% par rapport à l'halogénure mercurique. Dans ces conditions la vitesse et le rendement de la réaction sont favorisés, de même que la séparation du produit final.

Comme il a été dit précédemment, on utilise en outre un accepteur d'acide. On peut utiliser des accepteurs minéraux ou organiques, insolubles ou partiellement ou totalement solubles dans le milieu réactionnel. Comme accepteurs d'acide convenant bien on peut citer les sels alcalins ou alcalino-terreux des acides organiques ou des acides minéraux faibles comme le carbonate de sodium, de potassium ou de calcium, l'acétate de sodium ou de potassium, les hydroxydes alcalins ou alcalino-terreux tels que la soude, la potasse ou la chaux éteinte, les oxydes minéraux basiques tels que la chaux vive ou l'oxyde mercurique. Qu'il modifie immédiatement le pH ou non, l'accepteur d'acide peut être introduit soit en une seule fois, soit de manière fragmentée, soit encore continuement tout au long de la réaction. Lorsque l'accepteur ne modifie pas le pH du milieu avant qu'apparaissent l'acide halohydrique et l'acide organique qui se forment conformément à l'équation (I), il est avantageux de procéder à son introduction avant le début de la réaction, en une seule fois. C'est par exemple le cas avec le carbonate de calcium qui est insoluble dans le milieu en l'absence d'acides. Lorsque l'accepteur d'acide modifie immédiatement le pH du milieu dès son introduction, ce qui est le cas des accepteurs solubles partiellement ou totalement dans l'eau, il est également avantageux de l'introduire au fur et à mesure du déroulement de la réaction si bien que le pH du milieu réactionnel reste à une valeur sensiblement constante. Ceci peut être réalisé commodément en utilisant par exemple une solution aqueuse de soude ou de potasse.

Il a été découvert cependant que les accepteurs minéraux sont légèrement préférables aux accepteurs d'acide organiques tels que les sels alcalins des acides carboxyliques. En effet, on a constaté que le rendement dépassait rarement 80% lorsque des ions halogénures et, dans une moindre mesure, carboxylates sont présents en excès dans le milieu.

Selon une variante particulièrement préférée du procédé selon l'invention on utilise comme accepteur d'acide, l'oxyde mercurique. Il a en effet été découvert que, malgré le pouvoir basique modeste de cette substance, elle était d'un emploi particulièrement avantageux pour obtenir un produit final d'une grande pureté et un rendement pratiquement quantitatif par rapport au mercure total mis en jeu.

Lorsqu'on emploie l'oxyde mercurique ou tout autre accepteur d'acide, il convient d'utiliser une mole d'accepteur d'acide pour n moles d'halogénure mercurique, n étant le nombre de sites basiques dudit accepteur (par exemple $n = 1$ dans le cas de la soude et $n = 2$ dans le cas de la chaux). Il peut se faire que, lors de l'introduction de l'accepteur d'acide, notamment sous forme d'une charge initiale unique, l'halogénure mercurique soit précipité en oxyde mercurique. Il a été trouvé que, malgré les

apparences, cela ne perturbe pas très sensiblement la réaction qui s'effectue quand même dans la mesure où le pH du milieu réactionnel ne dépasse toutefois pas la valeur 12 et, de préférence, la valeur 10.

Comme il a été dit le pH peut être maintenu à une valeur sensiblement fixe au cours de la réaction ou bien être laissé librement évoluer. Dans ce dernier cas, le pH du milieu réactionnel diminue progressivement pour atteindre une valeur finale de l'ordre de 2. Généralement le maintien ou non du pH à une valeur fixe n'a que peu d'influence sur le déroulement de la réaction. Toutefois lorsqu'on souhaite utiliser un sel alcalin d'acide carboxylique comme accepteur d'acide, on doit maintenir le milieu à un pH acide, de préférence compris entre 5 et 6, et utiliser un léger défaut dudit sel par rapport à l'halogénure mercurique, de l'ordre de 10% en mole, à défaut de quoi le rendement n'est pas optimal.

La réaction peut être effectuée à la température ambiante, ce qui est particulièrement avantageux. On peut toutefois effectuer la réaction à une température différente, mais de préférence pas supérieure à 60°C (où il y a notamment décomposition dans le milieu du produit formé), ni inférieure à −10°C. La température, de préférence comprise entre 15 et 35°C, peut varier au cours de la réaction : toutefois, il est préféré de la maintenir constante, ce qui peut être réalisé en jouant sur le débit d'introduction de l'ester alkénylique $\alpha$—$\beta$ insaturé, puisque la réaction est exothermique, ou en refroidissant de façon continue.

Comme il a été dit plus haut, la réaction résulte de l'action d'un ester alkénylique $\alpha$—$\beta$ insaturé sur un halogénure mercurique. On introduit de préférence l'ester alkénylique $\alpha$—$\beta$ insaturé dans la solution-suspension d'halogénure mercurique dans le milieu réactionnel comprenant un accepteur d'acide. Quand l'introduction de l'ester alkénylique $\alpha$—$\beta$ insaturé est achevée, la réaction est pratiquement terminée. Toutefois, il est préférable de laisser la réaction se poursuivre une fois l'introduction de l'ester alkénylique $\alpha$—$\beta$ insaturé effectuée, en agitant le mélange et en maintenant la température de préférence au niveau de celle à laquelle l'opération d'introduction a été réalisée. Au terme de cette période dont la durée est de préférence, de 20 à 60 minutes, le mélange hétérogène obtenu est filtré et on recueille l'halogénomercurialdéhyde ou cétone à l'état de cristaux, directement à l'état très pur. Si on le souhaite, on peut recristalliser les produits obtenus dans l'eau.

Le rendement de la réaction dépend notamment de la nature du milieu réactionnel utilisé et de la présence et de la nature de l'accepteur d'acide. D'une manière générale, le rendement est meilleur dans l'eau pure que dans les mélanges homogènes ou hétérogènes d'eau avec d'autres solvants. De même le rendement excède rarement 20% en l'absence d'accepteur d'acide. Par contre, le rendement est couramment compris entre 70 et 90% quand on utilise un sel acalin d'acide carboxylique ou, mieux, des bases minérales tels que les carbonates solubles ou insolubles dans l'eau, les hydroxydes alcalins et alcalino-terreux ou les oxydes basiques.

Dans le cas de l'oxyde mercurique, le rendement est particulièrement bon, compris entre 95 et 100%, lorsqu'on utilise environ une mole d'oxyde mercurique et deux moles d'ester alkénylique $\alpha$—$\beta$ insaturé par mole d'halogénure mercurique.

La pureté des produits obtenus est d'une manière générale d'autant meilleure que l'accepteur d'acide utilise conduit à un bon rendement. Grâce au procédé selon l'invention, on peut atteindre des degrés de pureté jamais atteints et ce, sans recristallisation. Cette pureté est toutefois influencée par le degré d'humidité du produit. En cas de stockage prolongé, il est conseillé de bien sécher les halogénomercurialdéhydes et cétones, par exemple par distillation azéotropique avec le dichlorométhane.

On appréciera particulièrement l'intérêt du procédé selon l'invention non seulement à l'excellence des rendements et des degrés de pureté qu'il permet d'atteindre, mais encore au niveau des coûts de production. En effet, les esters alkényliques $\alpha$—$\beta$ insaturés sont des matières premières très peu coûteuses, notamment l'acétate de vinyle et les halogénures mercuriques sont généralement moins coûteux que les autres sels de mercure; en particulier, le chlorure mercurique est plus accessible que l'acétate. Par ailleurs, dans l'optique de la production de chloroformiate de vinyle ou d'isopropényle ou d'esters vinyliques, il est du plus grand intérêt de pouvoir réutiliser la totalité du chlorure mercurique qu'on obtient pour chaque mole formée de ces dérivés, d'autant plus qu'on obtient facilement l'oxyde mercurique par exemple par action d'un hydroxyle alcalin sur ledit chlorure mercurique.

Ainsi, le procédé selon l'invention, qui peut fonctionner en discontinu ou en continu, se prête admirablement à une intégration dans une unité de production des produits industriels précités dans laquelle les sels mercuriques circulent en circuit fermé, ce qui élimine les risques de pollution mercurielle.

Les exemples suivants sont donnés à titre d'illustration non limitatives de quelques variantes du procédé selon l'invention. D'autres variantes peuvent être aisément imaginées par l'homme de l'art, notamment basées, par exemple, sur la disponibilité de matières premières peu communes mais sous-produits d'autres fabrications industrielles.

Exemple 1:

Dans un réacteur de 500 ml muni d'une agitation mécanique, d'un thermomètre et d'un refrigérant, on a introduit 135 g de chlorure

mercurique, soit 0,5 mole, et 36,9 g d'acétate de sodium, soit 0,45 mole, comme accepteur d'acide.

On a coulé goutte à goutte dans le milieu obtenu, 56 g d'acétate de vinyle, soit 0,65 mole, en maintenant la température inférieure à 30°C. Une fois l'addition terminée, on a agité le milieu obtenu pendant une heure à la température ambiante. On a ensuite isolé le solide obtenu par filtration et on l'a lavé à l'éther éthylique. On a recueilli au total 109 g de chloromercuriacétaldéhyde, fondant à 130°C.

Le rendement est de 78% par rapport au chlorure mercurique.

Exemple 2

A titre de comparaison on a opéré dans les mêmes conditions qu'à l'exemple 1, mais sans utiliser d'acétate de sodium ou d'autre accepteur d'acide. Dans ce cas, il ne se forme que 28 g de chloromercuriacétaldéhyde fondant à 130°C, soit un rendement de 20% seulement.

Exemple 3

On a introduit, dans un réacteur de 500 ml, 67,9 g de chlorure mercurique (0,25 mole), 200 ml d'eau et 18,5 g (0,225 mole) d'acétate de sodium. On a coulé 28 g d'acétate de vinyle en 20 minutes dans le milieu obtenu, en maintenant la température à 40°C et en agitant le milieu à l'aide d'un agitateur à ancre tournante. Après une heure, on a filtré le sel en suspension à l'éther et on l'a séché sous vide sur $P_2O_5$. On a obtenu 41,9 g de chloromercuriacétaldéhyde fondant à 130°C, soit un rendement de 60%.

Exemple 4

Toutes les conditions de l'exemple précédent ont été reprises à l'exception de la température maintenue à 60°C.

On n'a obtenu que 36,9 g de chloromercuriacétaldéhyde fondant à 124°C, soit un rendement de 52,8%.

Exemple 5

On a repris les conditions des exemples 3 et 4 précédents, à l'exception de la température, maintenue à 22°C et on les a appliquées à des quantités quadruples de réactifs. On a obtenu du chloromercuriacétaldéhyde fondant à 130°C, avec un rendement de 76%.

Exemple 6

Dans un réacteur de 2 litres, on a introduit 600 ml d'eau et 203,7 g (0,75 mole) de chlorure mercurique.

On a alors introduit 64,5 g d'acétate de vinyle et, dès que le pH a atteint la valeur 3, on a maintenu ce pH à cette valeur par addition de soude 3 N.

La température étant maintenue quant à elle à 22°C et la réaction étant prolongée d'une heure après l'addition, on a obtenu finalement 157 g de chloromercuriacétaldéhyde, soit un rendement de 75%.

Le produit obtenu fondait à 132°C.

Exemple 7

On a utilisé les mêmes proportions initiales qu'à l'exemple 6 précédent, mais cette fois-ci on a utilisé de la soude 1N pour imposer au milieu la même variation de pH observée naturellement lors de l'exemple 5, avec l'acétate de sodium comme accepteur d'acide.

Le pH a ainsi évolué entre les valeurs 6,4 (initialement) et 2 (à la fin). La température a été maintenue constamment à 22°C.

On a obtenu 150,2 g de chloromercuriacétaldéhyde fondant à 131°C, soit un rendement de 71,8%.

Exemple 8

On a repris les mêmes conditions qu'à l'exemple 6, mais on a utilisé la soude 3N pour maintenir le pH du milieu réactionnel entre 6 et 6,5 pendant toute l'addition de l'acétate de vinyle. La température a été fixée à 22°C.

On a finalement obtenu du chloromercuriacétaldéhyde fondant à 127—128°C, avec un rendement de 89,5%.

Exemple 9

On a recommencé l'expérience de l'exemple 7 en utilisant du carbonate de sodium comme accepteur d'acide.

La réaction a été menée à 22°C et le pH a evolué entre les valeurs 6,2 et 2,5.

On a obtenu 145,4 g de chloromercuriacétaldéhyde fondant à 133°C, soit un rendement de 69,5%.

Pendant la réaction, on a observé un dégagement de gaz carbonique et la formation de ce fait d'une mousse assez abondante.

Exemple 10

On a utilisé comme milieu réactionnel un mélange de 50 ml d'eau et de 150 ml d'éthanol et les quantités de réactifs de l'exemple 5.

On a obtenu du chloromercuriacétaldéhyde fondant à 130°C, avec un rendement de 70,6%.

Exemple 11

On a repris les conditions des exemples 5 et 10, mais en remplaçant respectivement l'eau et le mélange éthanol-eau par un mélange 50/50 d'eau et de dichlorométhane.

On a obtenu du chloromercuriacétaldéhyde fondant à 134°C, mais avec un rendement de 35% seulement.

Exemple 12

On a utilisé dans cet essai un mélange 50/50 d'eau et de nitrobenzène. La température étant maintenue à 20°C et les autres conditions opératoires celles des exemples 10 et 11, on a obtenu du chloromercuriacétaldéhyde fondant à 134°C, avec un rendement de 42%.

Exemple 13

Dans la ligne des exemples 10 à 12 précédents, on a utilisé cette fois-ci un mélange 50/50 d'eau et de toluène, à 22°C.

On a obtenu du chloromercuriacétaldéhyde fondant à 120°C, avec un rendement de 58,5%.

Exemple 14

On a repris en tout point le mode opératoire de l'exemple 5, mais on a arrêté la réaction et filtré le solide obtenu dès la fin de l'introduction de l'acétate de vinyle ou, autrement dit, on n'a pas achevé la réaction par une heure d'agitation du milieu à 22°C.

On a obtenu du chloromercuriacétaldéhyde fondant à 130°C, avec un rendement de 61%.

Exemple 15

Dans un réacteur d'un litre on a placé 180 g (0,5 mole) de bromure mercurique, 400 ml d'eau et 36,9 g d'acétate de sodium.

La température du milieu étant maintenue entre 18 et 24°C, on a coulé dans la solution-suspension précédente, 56 g d'acétate de vinyle, tout en agitant.

Une fois l'introduction terminée, on a agité le mélange réactionnel pendant encore 30 minutes, à température ambiante, après quoi on a filtré, lavé à l'éther et séché sous vide le solide blanc obtenu.

On a recueilli ainsi 121,3 g de bromomercuriacétaldéhyde identifié par son spectre R.M.N. et fondant à 120°C.

Le rendement est de 75% par rapport au bromure mercurique.

Exemple 16

Dans un réacteur de 500 ml on a placé 67,9 g de $HgCl_2$ (0,25 mole), une charge de 12,5 g de poudre de carbonate de calcium (0,125 mole) (contenant 0,25 mole de site basique) et 200 ml d'eau. Le pH de ce milieu est d'environ 7.

On a alors introduit sous agitation 28 g d'acétate de vinyle (0,325 mole) en maintenant la température entre 25 et 35°C. On a laissé pendant une heure sous agitation à 25°C et on a obtenu après filtration, lavage et séchage du chloromercuriacétaldéhyde extrêmement pur, fondant à 134°C (contre 130°C aux indications de la littérature), avec un rendement de 82,5%.

Exemple 17

On a repris le mode opératoire de l'exemple 16 en utilisant de l'hydroxyde de calcium (0,125 mole) à la place du carbonate de calcium. Le pH initial était égal à 9 et on a observé un précipité de HgO. On a obtenu du chloromercuriacétaldéhyde fondant à 133°C, avec un rendement de 77%.

Exemple 18

La procédure des exemples 16 et 17 a été reprise en utilisant cette fois-ci une charge initiale de 0,25 mole de soude.

Le milieu, dans lequel on a observé un précipité d'oxyde mercurique, avait initialement un pH de 9,5.

On a obtenu du chloromercuriacétaldéhyde fondant à 134°C, avec un rendement de 75,5%.

Le même essai, réalisé avec l'ammoniaque, donne 40% de rendement en chloromercuriacétaldéhyde se décomposant entre 124 et 130°C.

Exemple 19

On a utilisé le mode opératoire des exemples 16 à 18 précédents, avec 0,25 mole de $HgCl_2$, 0,65 mole d'acétate de vinyle, 0,25 mole d'oxyde mercurique et 200 ml d'eau.

Le pH initial était compris entre 4 et 5.

On a obtenu 66,7 g de chloromercuriacétaldéhyde fondant à 134°C, soit un rendement de 95,7%.

Exemple 20

On a réïtéré la manipulation de l'exemple 19.

On a obtenu 67,4 g de chloromercuriacétaldéhyde très pur fondant à 134°C, soit un rendement de 96,6%.

Il est à noter que dans cet essai, comme dans le précédent, le milieu est initialement de couleur rouge (HgO) et qu'il est passé à une couleur blanche à la fin de la réaction, dont c'est un moyen commode de suivre l'évolution.

Exemple 21

On a voulu montrer l'influence néfaste de la présence d'un excès d'ion chlorure dans le milieu.

A cet effet, les manipulations des exemples 19 et 20 ont été reproduites en présence de 0,5 mole de chlorure de potassium.

Dans ce cas, toutes choses égales par ailleurs, on n'a obtenu que 46,9 g de chloromercuriacétaldéhyde fondant a 130°C seulement, soit un rendement de 67,3%.

Exemple 22

Dans un réacteur de 500 ml on a placé 54,15 g (0,25 mole) d'oxyde mercurique, 67,9 g de chlorure mercurique (0,25 mole) et 200 ml d'eau.

La température étant maintenue à environ 22°C, on a coulé sous agitation 65 g d'acétate d'isopropényle en 15 minutes. Une fois l'addition terminée, on a maintenu le milieu sous agitation pendant 45 minutes, à température ambiante. On a alors isolé le solide blanc obtenu par filtration. Après lavage à l'éther éthylique et séchage sous vide, on a obtenu 61,2 g de chloromercuriacétone $C1Hg\ CH_2\ COCH_3$, soit un rendement de 88,2%.

Ce composé fond à 106°C (littérature : 106°C) et contenait 0,39% d'eau en poids.

**Revendications**

1. Procédé de synthèse d'halogénomercurialdéhydes et cétones, caractérisé en ce qu'on fait réagir un ester alkénylique $\alpha$—$\beta$ insaturé d'acide carboxylique sur un halogénure mercurique, en présence d'eau et d'un accepteur d'acide.

2. Procédé de synthèse selon la revendication 1, caractérisé en ce que l'ester alkénylique $\alpha$—$\beta$ insaturé d'acide carboxylique est choisi dans le groupe constitué par les composés de formule générale:

$$R-\underset{\underset{O}{\|}}{C}-O-CR_1=CHR_2$$

où $R_1$ est un hydrogène ou un groupe alkyle comportant de 1 à 4 atomes de carbone,

où $R_2$ est un hydrogène ou bien forme avec $R_1$ un groupe cycloalkyle comprenant 5 à 7 atomes de carbone,

et où R est un groupe aliphatique comprenant de 1 à 12 atomes de carbone éventuellement substitué par un ou plusieurs groupes alkényloxycarbonyle identiques ou bien R est un groupe aromatique et en ce que l'halogénure mercurique est le chlorure ou le bromure mercurique.

3. Procédé selon l'une quelconque des revendications précédentes, caractérisé en ce que l'accepteur d'acide est choisi dans le groupe constitué par les sels alcalins et alcalino-terreux des acides organiques, les sels alcalins et alcalino-terreux des acides minéraux faibles, les hydroxydes alcalins et alcalino-terreux et les oxydes minéraux basiques.

4. Procédé selon la revendication 3, caractérisé en ce que l'accepteur d'acide est choisi dans le groupe constitué par l'acétate de sodium, l'acétate de potassium, le carbonate de calcium, la soude, la potasse, l'hydroxyde de calcium et l'oxyde de calcium.

5. Procédé selon la revendication 3, caractérisé en ce que l'accepteur d'acide est l'oxyde mercurique.

6. Procédé selon l'une quelconque des revendications 1 à 4, caractérisé en ce qu'on utilise environ une mole d'accepteur d'acide pour n moles d'halogénure mercurique, n étant le nombre de sites basiques dudit accepteur.

7. Procédé selon la revendication 6, caractérisé en ce qu'on introduit la totalité de l'accepteur sous forme d'une charge initiale unique.

8. Procédé selon l'une quelconque des revendications précédentes, caractérisé en ce qu'on effectue la réaction en présence d'un fort excès d'eau par rapport aux autres réactifs et d'un excès molaire de 0 à 30% d'ester alkénylique $\alpha$—$\beta$ insaturé par rapport à l'halogénure mercurique.

9. Procédé selon la revendication 5, caractérisé en ce qu'on utilise environ une mole d'oxyde mercurique et deux moles d'ester alkénylique $\alpha$—$\beta$ insaturé par mole d'halogénure mercurique.

10. Procédé selon la revendication 8, caractérisé en ce qu'on utilise de l'eau mêlée avec un solvant organique miscible ou non à l'eau.

11. Procédé selon l'une quelconque des revendications précédentes, caractérisé en ce qu'on effectue la réaction à une température comprise entre −10 et +60°C, de préférence entre 15 et 35°C.

12. Procédé selon l'une quelconque des revendications précédentes, caractérisé en ce qu'on introduit l'ester alkénylique $\alpha$—$\beta$ insaturé dans la solution ou la solution-suspension d'halogénure mercurique dans le milieu réactionnel.

13. Procédé selon la revendication 12, caractérisé en ce qu'on laisse se poursuivre la réaction une fois l'introduction de l'ester alkénylique $\alpha$—$\beta$ insaturé effectuée, en agitant le mélange.

14. Procédé selon la revendication 13, caractérisé en ce qu'on poursuit la réaction pendant 20 à 60 minutes.

## Claims

1. Process for the synthesis of halogenomercuri-aldehyde or -ketones, characterized in that an $\alpha$—$\beta$ unsaturated alkenyl ester of a carboxylic acid is reacted with a mercuric halide in the presence of water and of an acid acceptor.

2. Synthesis process according to claim 1, characterized in that the $\alpha$—$\beta$ unsaturated alkenyl ester of a carboxylic acid is selected from the group consisting of compounds of the general formula

$$R-\underset{\underset{O}{\|}}{C}-O-CR_1=CHR_2$$

wherein $R_2$ is Hydrogen or an alkyl group of 1 to 5 carbon atoms, $R_2$ is hydrogen or forms, together with $R_1$, a cycloalkyl group containing from 5 to 7 carbon atoms and R is an aliphatic group containing from 1 to 12 carbon atoms, which is optionally substituted by one or more identical alkenyloxy-carbonyl groups or alternatively R is an aromatic group, and in that the mercuric halide is mercuric chloride or bromide.

3. Process according to either one of preceding claims, characterized in that the acid acceptor is chosen from the group consisting of alkali metal and alkaline earth metal salts of organic acids, alkali metal or alkaline earth metal salts of weak inorganic acids, alkali metal and alkaline earth metal hydroxides and basic inorganic oxides.

4. Process according to claim 3, characterized in that the acid acceptor is chosen from the group comprising sodium acetate, potassium

acetate, calcium carbonate, sodium hydroxide, potassium hydroxide, calcium hydroxide and calcium oxide.

5. Process according to claim 3, characterized in that the acid acceptor is mercuric oxide.

6. Process according to any one of claims 1 to 4, characterized in that about one mol of acid acceptor is used per n mols of mercuric halide, n being the number of basic sites on the said acceptor.

7. Process according to claim 6, characterized in that all the acceptor is introduced in the form of a single initial batch.

8. Process according to any one of the preceding claims, characterized in that the reaction is carried out in the presence of a large excess of water, relative to the other reactants, and of a 0 to 30% excess of alkenyl ester, relative to the mercuric halide.

9. Process according to claim 5, characterized in that about one mol of mercuric oxide and two mols of $\alpha$—$\beta$ unsaturated alkenyl ester are used per mol of mercuric halide.

10. Process according to claim 8, characterised in that water mixed with a water-miscible or -immiscible organic solvent is used.

11. Process according to any one of the preceding claims, characterized in that the reaction is carried out at a temperature between −10 to +60°C and preferably between 15 and 35°C.

12. Process according to any one of the preceding claims, characterized in that the $\alpha$— unsaturated alkenyl ester is introduced into the solution or solution/suspension of mercuric halide in the reaction medium.

13. Process according to claim 12, characterized in that, once the $\alpha$—$\beta$ unsaturated alkenyl ester has been introduced, the reaction is allowed to continue, whilst stirring the mixture.

14. Process according to claim 13, characterized in that the reaction is continued for 20 to 60 minutes.

## Patentansprüche

1. Verfahren zur Herstellung von Halogenmercurialdehyden und -ketonen dadurch gekennzeichnet, dass ein $\alpha$—$\beta$ ungesättigter Alkenyl Ester einer Carbonsäure mit einem Quecksilber-(II) Halogenid, in Gegenwart von Wasser und einem säurebindendem Mittel, umgesetzt wird.

2. Herstellungsverfahren nach Anspruch 1 dadurch gekennzeichnet, dass der $\alpha$—$\beta$ ungesättigte alkenyl Ester einer Carbonsäure, aus der Gruppe bestehend aus den Verbindungen der Formel

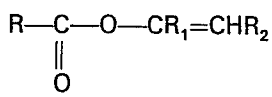

in welcher $R_1$ für Wasserstoff oder für einen Alkylrest mit 1 bis 4 Kohlenstoffatomen steht, $R_2$ für Wasserstoff steht oder mit $R_1$ einem Cycloalkyl mit 5 bis 7 Kohlenstoffatomen bildet und in welcher R für einem mit 1 bis 12 Kohlenstoffatomen, gegebenfalls mit einem or mehreren gleichen alkenyloxy-carbonyl Rest oder für einen aromatischen Rest steht, ausgewählt ist und dass der Quecksilber-(II)-Halogenid der Quecksilber-(II)- Chlorid oder -Bromid ist.

3. Verfahren nach Anspruch 1 oder 2, dadurch gekennzeichnet, dass das säurebindende Mittel aus der Gruppe bestehend aus den Alkali- und Erdalkali-salzen der organischen Säuren, den Alkali- und Erdalkali- salzen der schwachen anorganischen Säuren, der Alkali und Erdalkalihydroxiden und der anorganischen basischen Oxyden, ausgewählt ist.

4. Verfahren nach Anspruch 3,· dadurch gekennzeichnet, dass, das säurebindende Mittel aus der Gruppe bestehend aus dem Natriumcetat, dem Kaliumcetat, dem Calcium-carbonat, dem Natriumhydroxyd, dem Kaliumhydroxyd, dem Calciumhydroxyd und dem Calciumoxyd, ausgewählt ist.

5. Verfahren nach Anspruch 3, dadurch gekennzeichnet, dass das säurebindende Mittel der Quecksilber-(II)-oxyd ist.

6. Verfahren nach irgendwelchem der Patentansprüche 1 bis 4, dadurch gekennzeichnet, dass ungefähr ein Mol des säurebindendes Mittels für n Mole des Quecksilber-(II)-Halogenids, n stehend für die Anzahl der basischen Stellen des gesagten Mittels, verwendet wird.

7. Verfahren nach Anspruch 6 dadurch gekennzeichnet, dass das säurebindende Mittel insgesamt in einem einzigen Mal als Anfangsfüllung eingesetzt wird.

8. Verfahren nach irgendwelchem der oberen Patentansprüche, dadurch gekennzeichnet, das die Reaktion in Gegenwart eines grossen Überschusses von Wasser gegenüber den anderen Stoffen und in Gegenwart eines molaren Uberschusses von 0 bis 30% des $\alpha$—$\beta$ ungesättigten alkenyl Esters gegenüber des Quecksilber-(II)-Halogenids, durchgeführt wird.

9. Verfahren nach Anspruch 5, dadurch gekennzeichnet, daß ungefähr ein Mol von Quecksilber-(II)-oxyd und zwei Mole des $\alpha$—$\beta$ ungesättigten Alkenyl Esters für jedes Mol des Quecksilber-(II)-Halogenids, verwendet werden.

10. Verfahren nach Anspruch 8, dadurch gekennzeichnet, daß eine Mischung von Wasser mit einem mit Wasser oder nicht mit Wasser mischbare Lösungmittel verwendet wird.

11. Verfahren nach irgendwelchem der oberen Ansprüche, dadurch gekennzeichnet, daß die Reaktion zwischen −10 und +60°C, vorzüglicherweise zwischen 15 und 35°C, durchgeführt wird.

12. Verfahren nach irgendwelchem der oberen Ansprüche, dadurch gekennzeichnet, daß der $\alpha$—$\beta$ ungesättigte Alkenyl Ester auf die

Lösung oder auf die Lösung-Suspension des Quecksilber-(II)-Halogenids in das Reaktionmittel, eingesetz wird.

13. Verfahren nach Anspruch 12, dadurch gekennzeichnet, daß die Reaktion nach der Einsetzung des $\alpha$—$\beta$ ungesättigtes Alkenyl Esters unter Rührung ohne weiteres in Fortsetzung gelassen wird.

14. Verfahren nach Anspruch 13, dadurch gekennzeichnet, daßdie Reaktion 20 bis 60 Minuten in Fortsetzung gelassen wird.